(19) Europäisches Patentamt / European Patent Office / Office européen des brevets

(11) **EP 2 672 329 A1**

(12) **EUROPEAN PATENT APPLICATION**

(43) Date of publication:
**11.12.2013 Bulletin 2013/50**

(51) Int Cl.:
***G03H 1/08*** (2006.01)

(21) Application number: **13171052.7**

(22) Date of filing: **07.06.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.06.2012 KR 20120061385
14.09.2012 KR 20120102160**

(71) Applicant: **Korea Electronics Technology Institute
Gyeonggi-do 463-816 (KR)**

(72) Inventors:
• **Cho, Schoong Sang
Gyeonggi-do 463-925 (KR)**
• **Choi, Byeong Ho
Gyeonggi-do 448-161 (KR)**
• **Kang, Hoon Jong
Gyeonggi-do 410-764 (KR)**
• **Lee, Sang Keun
Seoul 13-729 (KR)**

(74) Representative: **Fiesser, Gerold Michael
Herzog Fiesser & Partner
Patentanwälte
Isartorplatz 1
80331 München (DE)**

(54) **Method for eliminating hologram dc noise and hologram device using the same**

(57)    A method for eliminating hologram DC noise and a hologram device using the same are provided. The method for processing the hologram includes: receiving input of hologram data; and implementing a differential operation with respect to the hologram data. Accordingly, the hologram data is processed by implementing the differential operation with respect to the hologram data, so that DC noise occurring when the hologram is reconstructed can be effectively eliminated.

## FIG. 1

START

S110 — INPUT HOLOGRAM DATA I(x, y)

S120 — CALCULATE I'(x, y)=▽I(x, y)

S130 — STORE/ RECONSTRUCT I'(x, y)

END

EP 2 672 329 A1

**Description**

CROSS-REFERENCE TO RELATED APPLICATION

This application claims priority from Korean Patent Application No. 10-2012-0061385, filed on June 08, 2012 and Korean Patent Application No. 10-2012-0102160, filed on September 14, 2012 in the Korean Intellectual Property Office, the disclosure of which is incorporated herein by reference in its entirety.

BACKGROUND

1. Field

Methods and apparatuses consistent with exemplary embodiments relate to a method for processing a hologram, and more particularly, to a method for processing a hologram to eliminate direct current (DC) noise occurring in the hologram, and a hologram device using the same.

2. Description of the Related Art

There are many factors that cause image quality of hologram data to deteriorate. In particular, deterioration of image quality caused by DC noise is a very serious problem.

Therefore, many techniques to eliminate DC noise when a hologram is reconstructed have been studied and discussed. A technique of eliminating a DC component using a high pass filter (HPF), and a method of eliminating a DC component in a mean subtraction method are known as representative techniques.

However, elimination of DC noise by the above techniques is not satisfactory. Also, the above techniques may affect not only a noise component of hologram data but also object data, and thus may cause distortion or deterioration of the reconstructed hologram.

SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a method for processing a hologram, which implements a differential operation with respect to hologram data in order to obtain/provide a high quality hologram, and a hologram device using the same.

One or more exemplary embodiments also provide a method for processing a hologram, which implements a differential operation with respect to hologram data in order to effectively eliminate DC noise, which occurs when the hologram is reconstructed, and a hologram device using the same.

According to an aspect of an exemplary embodiment, there is provided a method for processing a hologram, the method including: receiving input of hologram data; and implementing a differential operation with respect to the hologram data.

The differential operation may be an operation to eliminate DC noise occurring in a hologram.

The hologram data may be expressed by a scalar function, and the differential operation may be a vector differential operation to implement partial differentiation with respect to a scalar function and convert the scalar function into a vector function.

The vector differential operation may be a $\nabla$ (gradient) operation.

The method may further include storing the hologram data for which the differential operation is implemented.

The method may further include generating a hologram by reconstructing the hologram data for which the differential operation is implemented.

The implementing the differential operation may be implementing an nth order differential operation ($n \geq 2$) with respect to the hologram data.

The nth order differential operation may be a $\nabla^n$ ($n \geq 2$) operation.

The $\nabla^n$ operation may be an operation to eliminate DC noise occurring in a hologram, and the n may be determined according to an order of a component that causes the DC noise in the hologram data.

The hologram data may be defined by interference by an object wave and a reference wave, and the object wave and the reference wave may be defined by a function that is expressed by a product of itself and a coefficient after the $\nabla^n$ is calculated.

The $\nabla^n$ operation may be a $\nabla^2$ operation (Laplace operation).

According to an aspect of another exemplary embodiment, there is provided a hologram device including: a provider which provides hologram data; and a processor which implements a differential operation with respect to the hologram data provided by the provider.

The differential operation may be an operation to eliminate DC noise occurring in a hologram.

The differential operation may be a $\nabla^n$ ($n \geq 1$) operation.

The hologram device may further include a storage which stores the hologram data for which the differential operation is implemented by the processor.

The hologram device may further include a reconstructor which generates a hologram by reconstructing the hologram data for which the differential operation is implemented by the processor.

According to the exemplary embodiments described above, the hologram data is processed by implementing the differential operation with respect to the hologram data, so that DC noise occurring when the hologram is reconstructed can be effectively eliminated.

Also, since object data except for DC components from among components constituting hologram data is not changed according to the exemplary embodiments, the high quality hologram can be reconstructed without distortion or deterioration of image quality.

BRIEF DESCRIPTION OF THE DRAWING FIGURES

The above and/or other aspects will be more apparent by describing in detail exemplary embodiments, with reference to the accompanying drawings, in which:

FIG. 1 is a flowchart illustrating a method for processing a hologram according to an exemplary embodiment;

FIG. 2 is a flowchart illustrating a method for processing a hologram according to another exemplary embodiment;

FIG. 3 is a block diagram illustrating a hologram generating device according to still another exemplary embodiment; and

FIG. 4 is a block diagram of a hologram reconstructing device according to still another exemplary embodiment.

DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

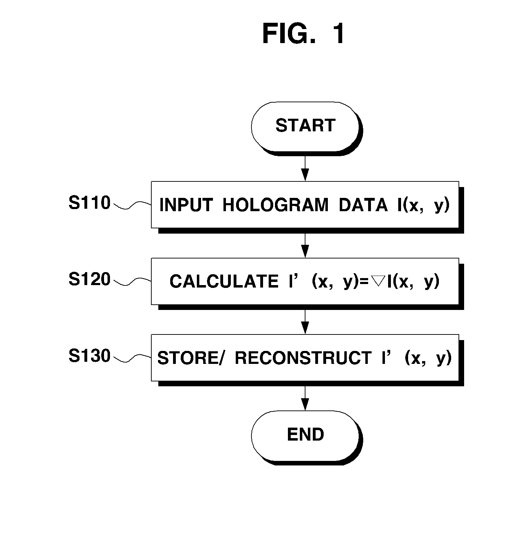

FIG. 1 is a flowchart illustrating a method for processing a hologram according to an exemplary embodiment. The processing the hologram in FIG. 1 corresponds to a process of processing hologram data in order to eliminate DC noise occurring in the hologram.

As shown in FIG. 1, hologram data I(x, y) is input first (S110). The hologram data I(x, y) is expressed by a scalar function as shown in following equation 1:

[Equation 1]

$$I(x, y) = \left| E_O(x, y) + E_R(x, y) \right|^2$$

In equation 1, $E_O(x, y)$ is an object wave which is reflected from an object when a hologram is recorded, and $E_R(x, y)$ is a reference wave which is used when the hologram is recorded. That is, the hologram data is defined as interference by the object wave and the reference wave, and the object wave and the reference wave are expressed by following equation 2:

[Equation 2]

$$E_O(x, y) = a_O(x, y)e^{i\phi_O(x, y)}$$

$$E_R(x, y) = a_R(x, y)e^{i\phi_R(x, y)}$$

wherein $a_O$ and $\Phi_O(x, y)$ are an amplitude and a phase of the object wave, and $a_R$ and $\Phi_R(x, y)$ are an amplitude and a phase of the reference wave.

If the object wave $E_O(x, y)$ and the reference wave $E_R(x, y)$ expressed by equation 2 are assigned to equation 1 expressing the hologram data, the hologram data $I(x, y)$ is expressed by following equation 3:

[Equation 3]

$$I(x, y) = a_R^2 + a_O^2 + E_O(x, y)E_R^*(x, y) + E_O^*(x, y)E_R(x, y)$$

wherein $a_R^2$ and $a_O^2$ are constants of the hologram data, and correspond to components that cause DC noise of the hologram.

In order to eliminate the DC component causing the DC noise from the hologram, I' (x, y) is calculated by applying a gradient (V) operation to the hologram data $I(x, y)$ input in operation S110 (S120). I'(x, y) may be expressed by following equation 4:

[Equation 4]

$$I'(x, y) = \nabla I(x, y) = \nabla\left[a_R^2 + a_O^2 + E_O(x, y)E_R^*(x, y) + E_O^*(x, y)E_R(x, y)\right]$$

In equation 4, the $\nabla$ operation is a kind of vector differential operation which implements partial differentiation with respect to the hologram data which is a scalar function, and converts the hologram data to a vector function, and converts the constants into 0 (zero). Accordingly, $a_R^2$ and $a_O^2$ are converted into 0 by the $\nabla$ operation.

On the other hand, the $\nabla$ operation does not change an amplitude but changes only a phase with respect to an exponential function and a trigonometrical function.

If equation 4 is expanded, equation 4 is arranged as following equation 5:

[Equation 5]

$$I'(x, y) = 2a_R a_O \angle \phi_O(x, y) - \phi_R(x, y) + \pi / 2$$

It can be seen from equation 5 that $a_R^2$ and $a_O^2$, which are DC components, are converted into 0 by the $\nabla$ operation and disappear. Accordingly, it may be estimated that the DC noise is eliminated from the hologram.

On the other hand, the amplitudes of the object wave and the reference wave corresponding to object data of the hologram data are not converted by the $\nabla$ operation. However, a phase of $\pi/2$ is added to the phases of the object wave and the reference wave.

However, it is not the phase of the hologram data but the amplitude that affects the image quality of the hologram when the hologram is reconstructed. That is, a change in the phase of the hologram data does not affect the image quality of the reconstructed hologram.

I'(x, y)[ = $\nabla$ I (x, y)] generated in operation S120 may be stored in a storage medium or may be reconstructed as a hologram (S130). It is determined whether I'(x, y) is stored or reconstructed according to a kind of a hologram device performing the algorithm of FIG. 1.

If the hologram device is a hologram generating device, I'(x, y) is stored in operation S130, and, if the hologram device is a hologram reconstructing device, I'(x, y) is reconstructed in operation S130.

When I'(x, y) is stored, the hologram data from which the DC component is eliminated is stored, and when I'(x,y) is reconstructed, the hologram from which the DC noise is eliminated is reconstructed.

Since the method according to the above-described exemplary embodiment retains the amplitude of the object data of the hologram data as it is without converting it, the object part may be displayed more clearly.

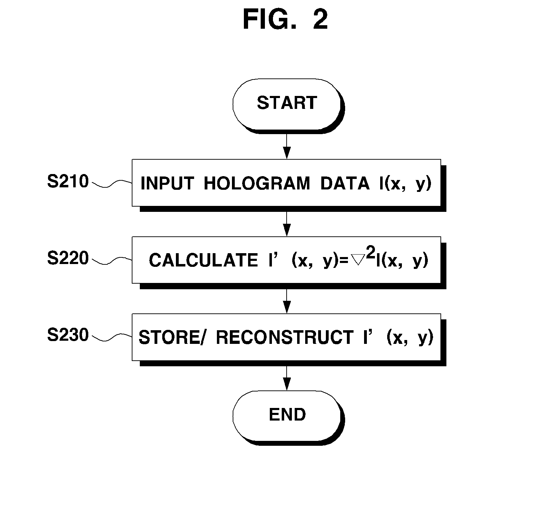

FIG. 2 is a flowchart illustrating a method for processing a hologram according to another exemplary embodiment. The processing the hologram shown in FIG. 2 corresponds to a process of processing hologram data in order to eliminate DC noise occurring in the hologram.

As shown in FIG. 32, hologram data I(x, y) is input first (S210). The hologram data I(x, y) is expressed by a scalar function as shown in equation 1 and an object wave and a reference wave aree expressed by equation 2 explained above.

On the other hand, $\Phi_O(x, y)$ and $\Phi_R(x, y)$ may be expressed by following equation 6:

[Equation 6]

$$\phi_O(x, y) = 2\pi(f_{X_O} x + f_{Y_O} y)$$

$$\phi_R(x, y) = 2\pi(f_{X_R} x + f_{Y_R} y)$$

If equation 6 is assigned to equation 2 and equation 2 to which equation 6 is assigned is assigned to equation 1, the hologram data I(x, y) is expressed by following equation 7:

[Equation 7]

$$I(x, y) = \left| a_O(x, y) \right|^2 + \left| a_R(x, y) \right|^2 + E_O(x, y)E_R^*(x, y) + E_O^*(x, y)E_R(x, y)$$

In equation 7, $|a_O(x, y)|^2$ and $|a_R(x, y)|^2$ correspond to components that cause DC noise of the hologram. It is common that $|a_O(x, y)|^2$ and $|a_R(x, y)|^2$ are treated as constants. However, if $|a_O(x, y)|^2$ and $|a_R(x, y)|^2$ are treated as a slow varying function (SVF), the DC noise may be eliminated by the hologram processing method according to the exemplary embodiment.

In the latter case, $|a_R(x, y)|^2$ and $|a_O(x, y)|^2$ are expressed by following equation 8:

[Equation 8]

$$\left| a_R(x, y) \right|^2 = \alpha_x x + \alpha_y y$$

$$\left| a_O(x, y) \right|^2 = \beta_x x + \beta_y y$$

In order to eliminate the DC component causing the DC noise from the hologram, I'(x, y) is calculated by applying a $\nabla^2$ operation (Laplace operation) to the hologram data I(x, y) input in operation S210 (S220). I'(x, y) is expressed by following equation 9:

[Equation 9]

$$I'(x, y) = \nabla^2 I(x, y)$$
$$= \nabla^2 \left[ \left| a_O(x, y) \right|^2 + \left| a_R(x, y) \right|^2 + E_O(x, y) E_R^*(x, y) + E_O^*(x, y) E_R(x, y) \right]$$

The $\nabla^2$ operation is a kind of vector differential operation which implements second order partial differentiation with respect to the hologram data which is a scalar function, and converts the hologram data into a vector function, and the constants and the linear function are converted into 0 (zero) by the $\nabla^2$ operation.

Accordingly, if $|a_O(x, y)|^2$ and $|a_R(x, y)|^2$ are constants or are SVF expressed by equation 8, $|a_O(x, y)|^2$ and $|a_R(x, y)|^2$ are converted into 0 by the $\nabla^2$ operation and the DC components are eliminated. Therefore, it may be estimated that the DC noise is eliminated from the hologram.

That is, as explained in following equation 10, only $E_O(x, y)E_R^*(x, y)$ and $E_O^*(x, y)E_R(x, y)$, which are object data necessary for reconstructing the hologram, remain in I'(x,y) by the $\nabla^2$ operation:

[Equation 10]

$$I'(x, y) = \nabla^2 \left[ E_O(x, y) E_R^*(x, y) + E_O^*(x, y) E_R(x, y) \right]$$

If the right-hand side of equation 10 is expanded, equation 10 is expressed by following equation 11:

[Equation 11]

$$I'(x, y) = \omega_x \left[ E_O(x, y) E_R^*(x, y) + E_O^*(x, y) E_R(x, y) \right]$$
$$+ \omega_y \left[ E_O(x, y) E_R^*(x, y) + E_O^*(x, y) E_R(x, y) \right]$$
$$= (\omega_x + \omega_y) \left[ E_O(x, y) E_R^*(x, y) + E_O^*(x, y) E_R(x, y) \right]$$

It can be seen from equation 11 that $E_O(x, y)E_R^*(x, y)$ and $E_O^*(x, y)E_R(x, y)$, which are object data, are retained as they are even by the $\nabla^2$ operation, and only a coefficient is changed from 1 to $\omega_x + \omega_y$.

This is because both $E_O(x, y)$ and $E_R(x, y)$ are exponential functions in which only a coefficient is changed even by the second order differentiation. The same result is obtained if the exponential functions representing $E_O(x, y)$ and $E_R(x, y)$ are expressed by the sum of a cosine function and a sine function.

Since the changed coefficient $\omega_x + \omega_y$ is equally applied to all of the object data of the hologram, it may be estimated that the object data would not be distorted. On the other hand, considering equations 2 and 6, $\omega_x + \omega_y$ may be expressed by following equation 12:

[Equation 12]

$$\omega_x + \omega_y = \left[ -4\pi^2 (2 f_{X_O}^2 + 2 f_{X_R}^2 - 4 f_{X_O} f_{X_R}) - 4\pi^2 (2 f_{Y_O}^2 + 2 f_{Y_R}^2 - 4 f_{Y_O} f_{Y_R}) \right]$$

Since $\omega_x + \omega_y$ can be calculated by equation 2, it is possible to reconstruct the coefficient to 1 by dividing I'(x, y) by $\omega_x + \omega_y$.

I'(x, y)[= $\nabla^2$I(x, y)] generated in operation S220 may be stored in a storage medium or may be reconstructed to a hologram (S230). It is determined whether I'(x, y) is stored or reconstructed according to a kind of a hologram device which performs the algorithm of FIG. 2.

If the hologram device is a hologram generating device, I'(x, y) is stored in operation S230, and, if the hologram device is a hologram reconstructing device, I'(x, y) is reconstructed in operation S230.

When I'(x, y) is stored, the hologram data from which the DC component causing the DC noise is eliminated may be stored, and, when I'(x, y) is reconstructed, the hologram from which the DC noise is eliminated may be reconstructed.

Since the method according to the above-described exemplary embodiment retains the object data of the hologram data as it is, the object may be clearly displayed.

Hereinafter, hologram devices to which the hologram processing methods illustrated in FIGS. 1 and 2 can be applied will be explained in detail.

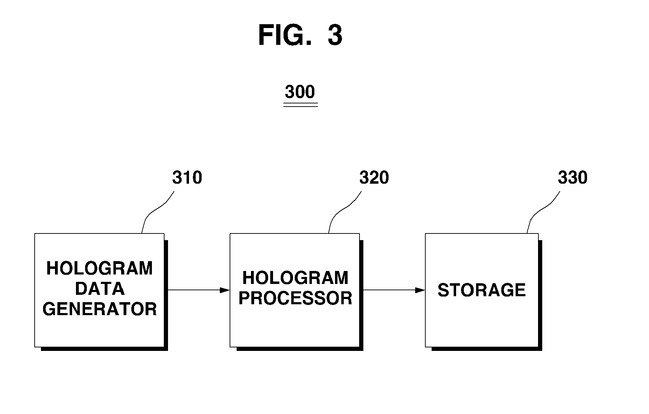

FIG. 3 is a block diagram illustrating a hologram generating device according to still another exemplary embodiment. A hologram generating device 300 to which the present disclosure is applicable includes a hologram data generator 310, a hologram processor 320, and a storage 330 as shown in FIG. 3.

The hologram data generator 310 generates hologram data I(x, y) using an image sensor, and serves as a hologram data provider to provide the generated hologram data to the hologram processor 320.

By generating I'(x, y) by applying a $\nabla$ operation or a $\nabla^2$ operation to the hologram data I(x, y) provided by the hologram data generator 310, the hologram processor 320 retains object data existing in the hologram data as it is and eliminates only a DC component and thus eliminates DC noise which occurs when the hologram is reconstructed.

The storage 330 stores the I'(x, y) generated by the hologram processor 320.

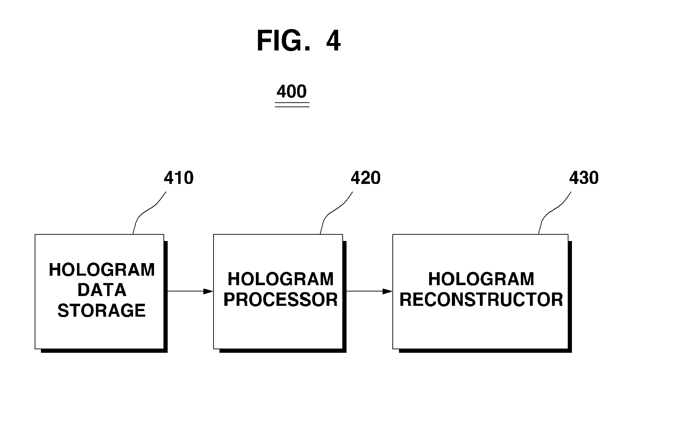

FIG. 4 is a block diagram illustrating a hologram reconstructing device to which the present disclosure is applicable. A hologram reconstructing apparatus 400 to which the present disclosure is applicable includes a hologram data storage 410, a hologram processor 420, and a hologram reconstructor 430 as shown in FIG. 4.

The hologram data storage 410 stores hologram data I(x, y) and serves as a hologram data provider to provide the stored hologram data to the hologram processor 420.

The hologram data I(x, y) stored in the hologram data storage 410 may be data that is generated using an image sensor or may be data that is transmitted from other storage media, devices, or communication networks.

By generating I'(x, y) by applying a $\nabla$ operation or a $\nabla^2$ operation to the hologram data I(x, y) provided by the hologram data storage 410, the hologram processor 420 retains object data existing in the hologram data as it is and eliminates only a DC component and thus eliminates DC noise which occurs when the hologram is reconstructed.

The hologram reconstructor 430 generates a hologram by reconstructing I'(x,y) generated by the hologram processor 320.

The methods for processing the hologram to remove the DC noise which occurs when the hologram is reconstructed, and the hologram devices using the same according to exemplary embodiments have been described so far.

In the above exemplary embodiments, the $\nabla$ operation or the $\nabla^2$ operation which is used to eliminate the DC noise occurring in the hologram may be substituted with a $\nabla^n$ ($n \geq 3$) operation. In particular, the latter case is more useful when the SVF is treated as an nth ($n \geq 2$) order function.

That is, the order 'n' of $\nabla$ may be determined according to an order of a component causing DC noise in hologram data (that is, an order of a SVF). For example, if the SVF is treated as a linear function, it is determined that n=2, and, if the SVF is treated as a cubic function, it is determined that n=4.

Also, the $\nabla^n$ ($n \geq 1$) operation which is used to eliminate DC noise occurring in the hologram is a kind of vector differential operation that implements partial differentiation with respect to a scalar function and converts the scalar function into a vector function, and may be substituted with other operations of the same role.

Also, the $\nabla^n$ ($n \geq 1$) operation may be substituted with a different kind of operation that can eliminate a DC component by implementing a differential operation with respect to hologram data.

Also, the module to implement the $\nabla^n$ ($n \geq 1$) operation, the vector differential operation, and other differential operations may be implemented by using hardware or software, and designing and programming may be performed in various ways and are not limited to a specific method.

In the above exemplary embodiment, $E_O(x, y)$ and $E_R(x, y)$ are expressed by an exponential function in which only a coefficient is changed by second order differentiation. That is, $E_O(x, y)$ and $E_R(x, y)$ are a kind of a function that is expressed by a product of itself and a coefficient which is changed by second order differentiation.

The technical idea of the present disclosure may be applied if $E_O(x, y)$ and $E_R(x, y)$ are substituted with another function that is expressed by a product of itself and a coefficient which is changed by nth order differentiation (n is a even number). Furthermore, the technical idea of the present disclosure may be applied if $E_O(x, y)$ and $E_R(x, y)$ are substituted with another function that is expressed by a product of itself and a coefficient which is changed by nth order differentiation ($n \geq 2$).

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

**Claims**

1. A method for processing a hologram, the method comprising:

    receiving input of hologram data; and
    implementing a differential operation with respect to the hologram data.

2. The method as claimed in claim 1, wherein the differential operation is an operation to eliminate DC noise occurring in a hologram.

3. The method as claimed in claim 1, wherein the hologram data is expressed by a scalar function,
   wherein the differential operation is a vector differential operation to implement partial differentiation with respect to a scalar function and convert the scalar function into a vector function.

4. The method as claimed in claim 3, wherein the vector differential operation is a $\nabla$ (gradient) operation.

5. The method as claimed in claim 1, further comprising storing the hologram data for which the differential operation is implemented.

6. The method as claimed in claim 1, further comprising generating a hologram by reconstructing the hologram data for which the differential operation is implemented.

7. The method as claimed in claim 1, wherein the implementing the differential operation is implementing an nth order differential operation ($n \geq 2$) with respect to the hologram data.

8. The method as claimed in claim 7, wherein the nth order differential operation is a $\nabla^n$ ($n \geq 2$) operation.

9. The method as claimed in claim 8, wherein the $\nabla^n$ operation is an operation to eliminate DC noise occurring in a hologram,
   wherein the n is determined according to an order of a component that causes the DC noise in the hologram data.

10. The method as claimed in claim 8, wherein the hologram data is defined by interference by an object wave and a reference wave,
    wherein the object wave and the reference wave are defined by a function that is expressed by a product of itself and a coefficient after $\nabla^n$ is calculated.

11. The method as claimed in claim 8, wherein the $\nabla^n$ operation is a $\nabla^2$ operation (Laplace operation).

12. A hologram device comprising:

    a provider which provides hologram data; and
    a processor which implements a differential operation with respect to the hologram data provided by the provider.

13. The hologram device as claimed in claim 12, wherein the differential operation is an operation to eliminate DC noise occurring in a hologram.

14. The hologram device as claimed in claim 12, wherein the differential operation is a $\nabla^n$ ($n \geq 1$) operation.

15. The hologram device as claimed in claim 12, further comprising a storage which stores the hologram data for which the differential operation is implemented by the processor.

16. The hologram device as claimed in claim 12, further comprising a reconstructor which generates a hologram by reconstructing the hologram data for which the differential operation is implemented by the processor.

# FIG. 1

START

S110 — INPUT HOLOGRAM DATA I(x, y)

S120 — CALCULATE I' (x, y)=$\nabla$I(x, y)

S130 — STORE/ RECONSTRUCT I' (x, y)

END

# FIG. 2

START

S210 — INPUT HOLOGRAM DATA I(x, y)

S220 — CALCULATE I'(x, y)=$\nabla^2$I(x, y)

S230 — STORE/ RECONSTRUCT I'(x, y)

END

# FIG. 3

300

| 310 | 320 | 330 |
|---|---|---|
| HOLOGRAM DATA GENERATOR | HOLOGRAM PROCESSOR | STORAGE |

# FIG. 4

400

```
  410              420              430

┌──────────┐     ┌──────────┐     ┌──────────────┐
│ HOLOGRAM │     │ HOLOGRAM │     │   HOLOGRAM   │
│   DATA   │ ──► │PROCESSOR │ ──► │RECONSTRUCTOR │
│ STORAGE  │     │          │     │              │
└──────────┘     └──────────┘     └──────────────┘
```

EP 2 672 329 A1

EUROPEAN SEARCH REPORT

Application Number

EP 13 17 1052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHENG LIU: "Elimination of zero-order diffraction in digital holography", OPTICAL ENGINEERING, vol. 41, no. 10, 1 October 2002 (2002-10-01), page 2434, XP55080096, ISSN: 0091-3286, DOI: 10.1117/1.1502682 * the whole document * | 1,2,5-16 | INV. G03H1/08 |
| X | JIANSU LI ET AL: "<title>Comparison and analysis on the methods of improving the image quality in digital hologram reconstruction</title>", PROCEEDINGS OF SPIE, vol. 8202, 23 November 2011 (2011-11-23), page 820205, XP055080154, ISSN: 0277-786X, DOI: 10.1117/12.906663 * paragraph [02.3] * | 1,2,5-11 | |
| X | HAN Y ET AL: "Laplacian differential reconstruction of one in-line digital hologram", OPTICS COMMUNICATIONS, NORTH-HOLLAND PUBLISHING CO. AMSTERDAM, NL, vol. 283, no. 6, 15 March 2010 (2010-03-15), pages 929-931, XP026868631, ISSN: 0030-4018 [retrieved on 2009-11-29] * page 929, right-hand column * | 1,3,4 | TECHNICAL FIELDS SEARCHED (IPC) G03H |

-/--

The present search report has been drawn up for all claims

| Place of search | Date of completion of the search | Examiner |
|---|---|---|
| Munich | 19 September 2013 | Noirard, Pierre |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 13 17 1052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEMOLI N ET AL: "SUBTRACTION DIGITAL HOLOGRAPHY", APPLIED OPTICS, OPTICAL SOCIETY OF AMERICA, WASHINGTON, DC; US, vol. 42, no. 5, 10 February 2003 (2003-02-10), pages 798-804, XP001160039, ISSN: 0003-6935, DOI: 10.1364/AO.42.000798 * page 802, left-hand column, lines 10-12 * | 1-4 | |

-----

TECHNICAL FIELDS
SEARCHED      (IPC)

The present search report has been drawn up for all claims

| Place of search | Date of completion of the search | Examiner |
|---|---|---|
| Munich | 19 September 2013 | Noirard, Pierre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120061385

- KR 1020120102160